# EUROPÄISCHE PATENTANMELDUNG

(11) **EP 1 207 029 A1**
(43) Veröffentlichungstag der Anmeldung: **22.05.2002**
(21) Anmeldenummer: 01125632.8
(22) Anmeldetag: 26.10.2001
(51) Int. Cl.: B28D 1/22, B28D 1/30, G01B 3/14, G01B 5/207

(54) **Variable Kreisbogenschablone**

(30) Priorität: 17.11.2000 DE 20019548 U
(71) Anmelder: EM-DS Solutions Lizenzverwertung OHG, 88250 Weingarten (DE)
(72) Erfinder: Müller, Erich, 88250 Weingarten (DE); Schmid, Daniel, 72135 Dettenhausen (DE)
(74) Vertreter: Kern, Wolfgang, Dipl.-Ing.

(57) **Zusammenfassung**

Variable Kreisbogenschablone, insbesondere für Fliesenschneidgeräte und zur Längenmessung von gekrümmten Kanten und Oberflächen.

Damit sich mit dieser Kreisbogenschablone (1) die unterschiedlichsten Kreisbogenkrümmungen verwirklichen lassen, ohne unterschiedliche Schablonensätze zu benutzen, und um dadurch eine Vielzahl phantasievoller Designs auf wirtschaftliche Weise veröffentlichen zu können, wird ein biegeelastisches Führungsband (4) zur Anlage an die zu messenden Kanten bzw. Oberflächen bzw. zur Herstellung von gebogenen Fliesenschnitten durch Entlangbewegung eines Ritzelhebels (17) des Fliesenschneidgerätes (11) an der entsprechenden gebogenen Oberfläche des Führungsbandes (4) vorgeschlagen, das durch eine Vielzahl paralleler oder nahezu paralleler Fühlerstifte (8) in die gewünschte Bogenform einstellbar und in dieser Einstellung haltbar ist, wobei die Fühlerstifte (8) in dem Schablonenkörper (20) verschiebbar und festlegbar angeordnet sind und mit ihren Stirnseiten (18) gegen die Oberfläche des auf die gewünschte Krümmung eingestellten Führungsbandes (4) drücken und sie beim Ritz- oder Meßvorgang in dieser Lage festhalten.

## Beschreibung

Die Erfindung betrifft eine variable Kreisbogenschablone insbesondere für Fliesenschneidgeräte und zur Längenmessung von gekrümmten Kanten und Oberflächen.

Bekannte Fliesenschneidgeräte (Gbm 200 03 820), die oftmals auch mit einer Brechvorrichtung für die zu schneidenden Fliesen ausgestattet sind, weisen einen die zu schneidende Fliese aufnehmenden Tisch und eine über der Tischoberfläche geführte Ritzhebeleinrichtung mit Schneidrädchenhalter auf Mit diesen Mitteln lassen sich ohne weiteres gerade Fliesenschnitte herstellen. Zur Erzeugung von gekrümmten Fliesenschnitten sind Kurvenschablonen erforderlich, in denen das Schneidrad zur Erzeugung des Kurvenschnittes auf dem gewünschten Krümmungsbogen geführt wird. Derartige Schablonen bestehen in der Regel aus Edelstahl und sind mit einer gummierten Unterseite versehen, mit der sie auf der zu schneidenden Fliese aufliegen. Dies bedeutet, daß für jeden gewünschten Krümmungsradius eine besondere Schablone anzufertigen bzw. einzusetzen ist. Daß dies einen erheblichen Kostenaufwand bedeutet, bedarf keiner weiteren Erläuterung. Außerdem ist die Bindung des Fliesenlegers, der seine Fliesen zuschneidet, an bestimmte, wenn auch in großer Zahl vorliegende unterschiedliche Schablonen immer eine Einschränkung seines Gestaltungsbedürfnisses, wenn er nicht im Freihandschnitt ohne Schablone arbeiten kann, um beliebige Schnitte auszuführen bzw. dem auf Fliesenoberflächen aufgezeichneten gebogenen Linien freihändig mit einem in der Hand gehaltenen Ritzel zu folgen.

Die Aufgabe der Erfindung besteht deshalb darin, eine variable Kreisbogenschablone zu schaffen, mit der sich die unterschiedlichsten Kreisbogenkrümmungen verwirklichen lassen, ohne unterschiedliche Schabloneneinsätze zu benutzen, um dadurch eine Vielzahl phantasievoller Designs auf wirtschaftliche Weise verwirklichen zu können bzw. eine Vielzahl von Schablonen mit jeweils einer bestimmen Krümmung zu bevorraten.

Diese Aufgabe wird erfindungsgemäß dadurch erreicht, daß ein biegeelastisches Führungsband zur Anlage an die zu messenden Kanten bzw. Oberflächen bzw. zur Herstellung von gebogenen Fliesenschnitten durch Entlangbewegung eines Ritzhebels des Fliesenschneidgerätes an der entsprechend gebogenen Oberfläche des Führungsbandes, das durch eine Vielzahl paralleler oder nahezu paralleler Fühlersstifte in die gewünschte Bogenform einstellbar und in dieser Einstellung haltbar ist, wobei die Fühlerstifte in dem Schablonenkörper verschiebbar und festlegbar angeordnet sind und mit ihren Stirnseiten gegen die Oberfläche des auf die gewünschte Krümmung eingestellten Führungsbandes drücken und sie beim ritz- oder Meßvorgang in dieser Lage festhalten.

Die vorgeschlagene variable Kreisbogenschablone läßt sich somit nicht nur in Verbindung mit Fliesenschneidgeräten verwenden, sondern auch mit anderen oder ohne solche Geräte, und zwar insbesondere zur Messung der Länge von gekrümmten Kanten und Oberflächen, da ihre kennzeichnenden Bauteile und deren Kombination ein selbständig handhabbares Meß- bzw. Arbeitsgerät verwirklichen.

Gemäß einer vorteilhaften Ausgestaltung des Erfindungsvorschlages weist die Kreisbogenschablone einen Schablonenkörper auf, der sich aus einem Schablonenoberteil und einem Schablonenunterteil zusammensetzt, die zwischen sich die Fühlerstifte verschiebbar aufnehmen und durch Verbindungsmittel, insbesondere Schrauben, zusammenhaltbar sind. Für den Fall, daß eine solche Kreisbogenschablone in Verbindung mit einem Fliesenschneidgerät Verwendung finden soll, hat es sich bewährt, den Schablonenkörper mit seitlichen Befestigungslaschen zu versehen, durch die er an dem Tisch des Fliesenschneidgerätes angebracht, beispielsweise angeschraubt werden kann.

Ein für die Gesamtkonstruktion besonders wesentliches Element ist das Führungsband, das sich auf die gewünschte Krümmung bzw. den gewünschten Krümmungsbogen einstellen läßt und das in vorteilhafter Weise an dem Schablonenkörper und/oder wenigstens einigen der Fühlerstifte einstellbar befestigt ist. Auch hier kann die Befestigung zweckmäßigerweise durch Schrauben erfolgen.

Die Fühlerstifte, deren vordere stirnseitigen Enden den Krümmungsbogen fixieren sollen, sind zweckmäßigerweise wenigstens im Schablonenunterteil verschiebbar gelagert, und zwar in dort befindlichen Führungsnuten, in denen sie in Richtung auf das Führungsband bewegbar angeordnet werden können.

Diese Führungsnuten können vorteilhafterweise parallel zueinander und in gleichen Abständen voneinander angeordnet sein, wobei es sich bewährt hat, die Fühlerstifte mindestens so lang auszubilden, daß sie bei auf die gewünschte Kreisbogenkrümmung eingestelltem Führungsband mit ihren hinteren Enden wenigstens teilweise noch aus dem Schablonenkörper herausragen und mit ihren stirnseitigen vorderen Enden die Oberfläche des Führungsbandes berühren.

Damit die Fühlerstifte nach Herstellung der gewünschten Krümmung des Führungsbandes auch mit dessen Oberfläche in Berührung bleiben, also beim Entlangfahren der Ritzeinrichtung an dem so eingestellten Führungsband sich nicht verschieben, insbesondere nach hinten ausweichen können, sollten die Fühlerstifte zweckmäßigerweise in bzw. an dem Schablonenkörper arretierbar sein. Dies geschieht vorteilhafterweise dadurch, daß das Schablonenoberteil gegen das Schablonenunterteil gepreßt wird.

Weitere vorteilhafte Ausgestaltungen der Erfindung sind in den Unteransprüchen gekennzeichnet.

Die Erfindung wird nachfolgend anhand des in der Zeichnung dargestellten Ausführungsbeispiels näher erläutert. In der Zeichnungen zeigen:
- Fig. 1: eine schematische Draufsicht der Kreisbogenschablone,
- Fig. 2: eine schematische Seitenansicht der Kreisbogenschablone von Fig. 1, aus der der Schablonenunterteil und der Schablonenoberteil mit den Führungskanälen für die Fühlerstifte ersichtlich sind und
- Fig. 3: eine schematische perspektivische Draufsicht eines an sich bekannten Fliesenschneidgerätes mit eingebauter erfindungsgemäßer variabler Kreisbogenschablone.

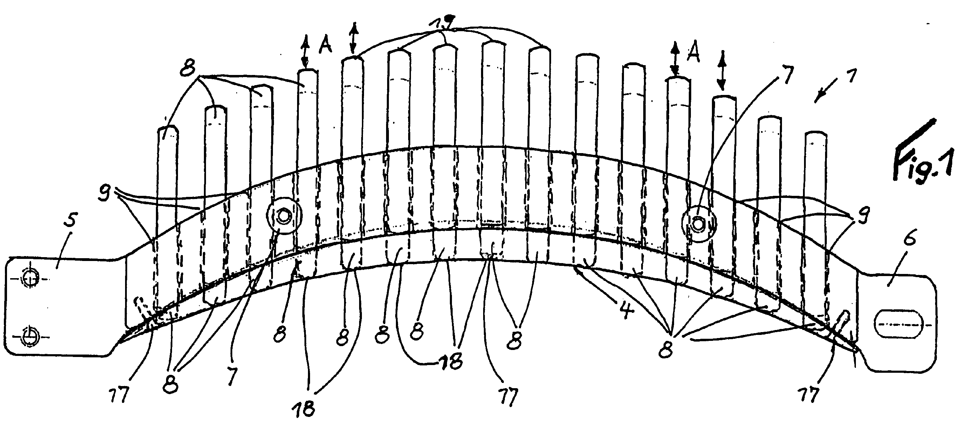

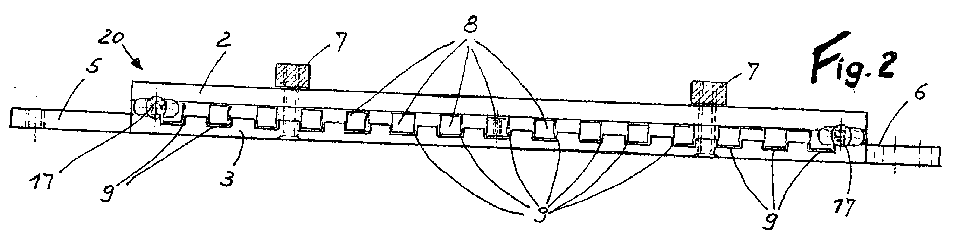

Die in den Figuren 1 und 2 schematisch dargestellte variable Kreisbogenschablone 1 weist einen Schablonenkörper 20 auf, bestehend aus einem Schablonenunterteil 3 und einem Schablonenoberteil 2, die durch Schrauben 7 miteinander verbindbar und zusammenhaltbar sind. Zwischen diesen beiden Schablonenteilen sind im im Unterteil 3 in dort vorhandenen parallelen und mit Abstand voneinander angeordneten Führungskanälen 9 Fühlerstifte 8 in Richtung der in Fig. 1 eingezeichneten Doppelpfeile A hin- und herverschiebbar gelagert, deren stirnseitige vordere Enden 18 die Oberfläche eines biegeelastischen Führungsbandes 4 berühren können, sobald dieses auf die gewünschte Krümmung eingestellt worden ist, bzw. um dieses auf die gewünschte krümmung einzustellen, welche beispielsweise dem durchzuführenden Fliesenschnitt entspricht.

Das Führungsband 4 legt sich also an die Vielzahl paralleler oder nahezu paralleler Fühlerstifte 8 an, deren vordere Stirnseiten 18 somit auch die gewünschte Bogenform begrenzen und wird in dieser Einstellung gehalten. Hierzu ist das Führungsband 4 an dem Schablonenkörper 20 und/oder wenigstens einigen der Fühlerstifte 8 einstellbar befestigt, und zwar mit Hilfe der Schrauben 17. Wenigstens einige der Fühlerstifte 8 sind mindestens so lang, daß sie bei auf die gewünschte Kreisbogenkrümmung eingestelltem Führungsband 4 mit ihren hinteren Enden 19 wenigstens teilweise noch aus dem Schablonenkörper 20 herausragen und mit ihren stirnseitigen vorderen Enden 18, wie oben bereits erwähnt, die Oberfläche des Führungsbandes berühren.

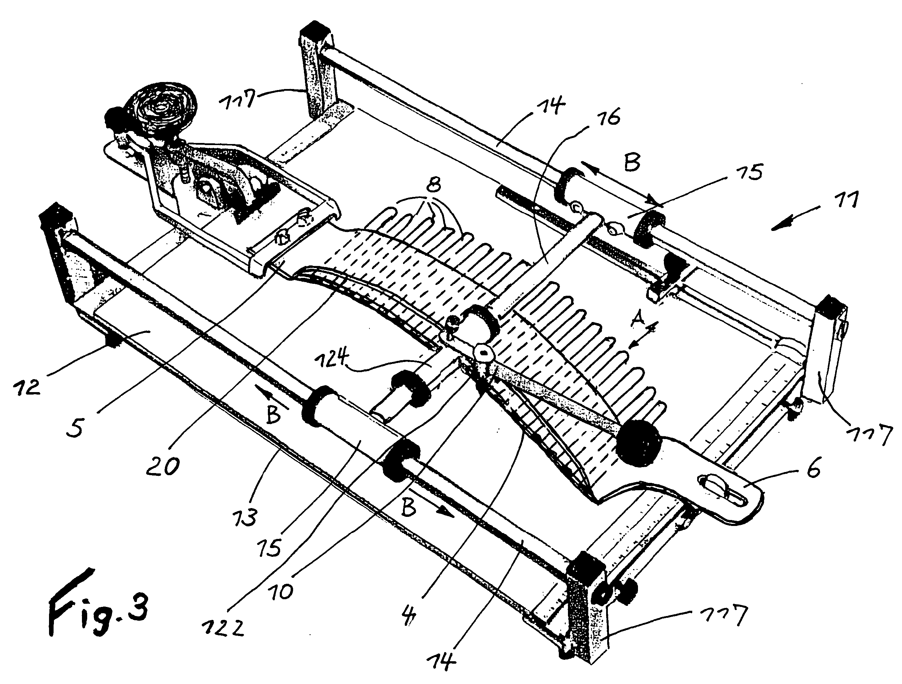

Dadurch, daß die beispielsweise im Querschnitt rechteckigen Fühlerstifte 8 im vollständig zusammengeschraubten Zustand des Schablonenkörpers 20 von dessen Oberteil 2 gegen das Unterteil 3 gedrückt werden, werden sie in den Führungsnuten 9 festgelegt, in diesen also eingeklemmt. In diesem Zustand ist die variable Kreisbogenschablone 1 als in sich geschlossene Einheit transportierbar und nicht nur in ein Fliesenschneidgerät der in Fig. 3 gezeigten Art einsetzbar, sondern unabhängig von dem Zweck des Fliesenschneidens auch ganz allgemein verwendbar als Längenmeßgerät für gekrümmte Kanten oder Oberflächen. Im letzteren Fall wird das Führungsband 4 auf die zu messende Kante oder Oberfläche aufgesetzt und hinsichtlich seiner Krümmung an die Krümmung der zu messenden Fläche oder Kante durch Verschieben der Fühlerstifte 8 angepaßt, nachdem die Befestigungsschrauben 7 gelockert worden sind, so daß der Schablonenoberteil 2 in bezug auf den Unterteil 3 etwas Spiel gibt.

Das biegeelastische Führungsband 4 kann zweckmäßigerweise aus Metall und/oder Kusntstoff bestehen, wie auch die Fühlerstifte 8 aus Metall und/oder Kunststoff gefertigt sein können, um den gewünschten Zweck zu erfüllen, was bedeutet, daß der Fachman in der Lage ist, für die genannten Gegenstände geeignete Materialien auszuwählen.

Wie bereits als Beispiel einer Anwendung der variablen Kreisbogenschablone 1 ausgeführt, läßt sich diese auf dem Tisch 13 eines an sich bekannten Fliesenschneidgerätes 11 anordnen, auf dessen Oberfläche 12 die zu schneidende Fliese abgelegt wird und dessen vier Ecken mit Ständern 117 versehen sind, welche zwei sich parallel zu den Tischlängsrändern erstreckende Führungsschienen für die beiden auf ihnen in Richtung der Doppelpfeile B verschiebbar sitzenden Führungshülsen 15 einer Traverse 16 mit Abstand von der Tischoberfläche haltern.

Auf der Traverse 16 ist eine in Tischquerrichtung verschiebbar gelagerte Führungshülse 124 angebracht, die einen Schneidrädchenhalter 122 sowie einen Ritzhebel 17 beweglich aufnimmt. Mit Hilfe des Ritzhebels 17 kann von Hand das Schneidrädchen gegen die nicht dargestellte Fliesenoberfläche gedrückt und an der Oberfläche des Führungsbandes 4, von einem Ende zum anderen, entlangbewegt werden, um den in der variablen Schablone 11 eingestellten Krümmungsbogen auf die Fliesenoberfläche zu übertragen, d.h. in diese Oberfläche einen entsprechenden Bogen einzuritzen und die Fliese schließlich zu schneiden bzw. zu brechen.

Auf diese Weise lassen sich mit Hilfe der in dem Fliesenschneidgerät 11 an den Befestigungslaschen 5, 6 angebrachten variablen Kreisbogenschablone die unterschiedlichsten Kreisbögenkrümmungen einstellen und entsprechende Kurvenschnitte ausführen, ohne daß die Schablone gewechselt werden muß. Erforderlich ist allerdings in jedem Fall die Verstellung der Fühlerstifte 8 in Richtung des Doppelpfeils A innerhalb des Schablonenkörpers 20, wie dies oben ausgeführt worden ist zur Anpassung an den herzustellenden Krümmungsbogen.

## Patentansprüche

1. Variable Kreisbogenschablone insbesondere für Fliesenschneidgeräte sowie unabhängig davon zur Längenmessung von gekrümmten Kanten und Oberflächen, **gekennzeichnet durch** ein biegeelastisches Führungsband (4) zur Anlage an die zu messenden Kanten bzw. Oberflächen bzw. zur Herstellung von gebogenen Fliesenschnitten **durch** Entlangbewegung eines Ritzhebels des Fliesenschneidgerätes an der entsprechend gebogenen Oberrfläche des Führungsbandes (4), das **durch** eine Vielzahl paralleler oder nahezu paralleler Fühlersstifte (8) in die gewünschte Bogenform einstellbar und in dieser Einstellung haltbar ist, wobei die Fühlerstifte (8) in dem Schablonenkörper (20) verschiebbar und festlegbar angeordnet sind und mit ihren Stirnseiten (18) gegen die Oberfläche des auf die gewünschte Krümmung eingestellten Führungsbandes (4) drücken und sie beim Ritz- oder Meßvorgang in dieser Lage festhalten.

2. Kreisbogenschablone nach Anspruch 1, **dadurch gekennzeichnet, daß** der Schablonenkörper (20) aus einem Schablonenoberteil (2) und einem Schablonenunterteil (3) besteht, die zwischen sich die Fühlerstifte (8) verschiebbar aufnehmen und durch Verbindungsmittel, insbesondere Schrauben (7), zusammenhaltbar sind.

3. Kreisbogenschablone nach Anspruch 2, **dadurch gekennzeichnet, daß** der Schablonenkörper (20) seitliche Befestigungslaschen (5, 7) zur Anbringung an dem Tisch (13) eines Fliesenschneidgerätes (11) aufweist.

4. Kreisbogenschablone nach einem der Ansprüche 1 - 3, **dadurch gekennzeichnet, daß** das Führungsband (4) an dem Schablonenkörper (20) und/oder wenigstens einigen der Fühlerstifte (8) einstellbar befestigt ist.

5. Kreisbogenschablone nach Anspruch 4, **dadurch gekennzeichnet, daß** die Befestigungsmittel Schrauben (17) sind.

6. Kreisbogenschablone nach einem der Ansprüche 1 - 5, **dadurch gekennzeichnet, daß** die Fühlerstifte (8) in wenigstens im Schablonenunterteil (3) befindlichen Führungsnuten (9) verschiebbar gelagert sind.

7. Kreisbogenschablone nach Anspruch 6, **dadurch gekennzeichnet, daß** die Führungsnuten (9) parallel zueinander und in gleichen Abständen voneinander angeordnet sind.

8. Kreisbogenschablone nach einem der Ansprüche 1 - 7, **dadurch gekennzeichnet, daß** die Fühlerstifte (8) mindestens so lang sind, daß sie bei auf die gewünschte Kreisbogenkrümmung eingestelltem Führungsband (4) mit ihren hinteren Enden (19) wenigstens teilweise noch aus dem Schablonenkörper (20) herausragen und mit ihren stirnseitigen vorderen Enden (18) die Oberfläche des Führungsbandes (4) berühren.

9. Kreisbogenschablone nach einem der Ansprüche 1 - 8, **dadurch gekennzeichnet, daß** die Fühlerstifte (8) nach Herstellung der gewünschten Krümmung des Führungsbandes (4) in bzw. an dem Schablonenkörper (20) arretierbar sind.

10. Kreisbogenschablone nach Anspruch 9, **dadurch gekennzeichnet, daß** zur Arretierung der Fühlerstifte (8) in den Führungskanälen (9) das Schablonenoberteil (2) gegen das Schablonenunterteil (3) preßbar ist.

11. Kreisbogenschablone nach Anspruch 10, **dadurch gekennzeichnet, daß** der Anpreßdruck durch Schrauben (7) aufbringbar ist, die die beiden Schablonenteile (2, 3) zusammenhalten.

12. Kreisbogenschablone nach einem der Ansprüche 1 - 10, **dadurch gekennzeichnet, daß** das Führungsband (4) aus Metall und/oder Kunststoff besteht.

13. Kreisbogenschablone nach einem der Ansprüche 1 - 10, **dadurch gekennzeichnet, daß** die Fühlerstifte (8) aus Metall und/oder Kunststoff bestehen.
